# EUROPEAN PATENT SPECIFICATION

(11) **EP 3 273 707 B1**
(45) Date of publication and mention of the grant of the patent: **16.10.2019**
(21) Application number: 16180442.2
(22) Date of filing: 20.07.2016
(51) Int. Cl.: H04W 4/06

(54) **METHOD AND SYSTEM FOR DISPLAYING LOCATION SPECIFIC CONTENT BY A HEAD MOUNTED DISPLAY DEVICE**
VERFAHREN UND SYSTEM ZUM ANZEIGEN STANDORTSPEZIFISCHER INHALTE DURCH EINE KOPFMONTIERTE ANZEIGEVORRICHTUNG
PROCÉDÉ ET SYSTÈME D'AFFICHAGE D'UN CONTENU SPÉCIFIQUE À UN EMPLACEMENT SUR UN CASQUE À RÉALITÉ VIRTUELLE

(43) Date of publication of application: 24.01.2018
(73) Proprietor: Deutsche Telekom AG, 53113 Bonn (DE)
(72) Inventor: WIRTHS, Wolfgang, 53125 Bonn (DE)
(74) Representative: Schwöbel, Thilo K.

(56) References cited:
- US-A1- 2012 127 284
- US-A1- 2014 368 532

## Description

### BACKGROUND

The present invention relates to a method for displaying location specific content by a head mounted display device.

Furthermore, the present invention relates to a system for displaying location specific content by a head mounted display device.

There is a growing need for technologies that provide information to users in order to assist them in everyday life or in professional applications. In augmented reality systems a real scene can be perceived that is enriched by virtual elements. For example, the real scene may be enriched by a text panel or a pictogram. In such systems often head mounted displays (HMDs) are employed for displaying virtual information content. US2012127284 A1 describes a head mounted display which can display virtual elements. However, aligning those virtual elements with the real world is challenging. Thus, there is a need for technologies to improve embedding virtual elements in the real world view.

### SUMMARY

An object of the present invention is to allow for a more realistic integration of location specific content in the real world view of the head mounted display device.

The invention is defined by the independent claims.

According to the present invention location specific content is related to a predetermined spatial position, e.g. a position of a building or a landmark. The location specific content is received by a head mounted display device. The distance between the head mounted display device and the predetermined spatial position is determined so as to allow for scaling and rendering the location specific content. Thereby an improved degree of immersion may be provided when displaying the location specific content in the head mounted display. Subsequent to determining the distance between the head mounted display device and the predetermined spatial position the location specific content is displayed using the head mounted display device depending on the determined distance. Thus, the invention provides an improved method of providing location specific content to a mobile user by way of augmented reality technology.

Within the context of the presented invention, a head mounted display device is considered as a display device that is configured to be worn on the head of a user, e.g. in form of eyeglasses or as part of a helmet. The head mounted display device may be an optical head mounted display device which comprises a semi-transparent display screen on which the location specific content is projected onto. Those head mounted display devices are often referred to as of the optical see-through type. Alternatively, the head mounted display device may display a real world view provided by a video camera which is overlaid by the location specific content. Combining of the real world view and the location specific content may be done electronically. Such head mounted display devices are typically referred to as of the video see-through type. Further alternatively, the head mounted display device may be virtual retinal display device which projects a display on the retina of the eye of the user.

The location specific content is related to the predetermined spatial position. In case the predetermined spatial position is a position of a shop the location specific content may include information related to the shop, e.g. opening hours of the shop or special offers for products sold in the shop. If the predetermined spatial position is a position of a landmark the location specific content may include tourist information concerning the landmark or opening hours of the landmark. In case the predetermined spatial position is a position of a parking ground or parking deck the location specific content may include a price table or a display of free parking positions.

The location specific content may be interactive content. An example of such an interactive content is a user interface of a software application which provides functionality relating to the predetermined spatial position. The interactive content may be in the form of a user interface for processing payment transactions, in particular cashless payments. E.g. the interactive content may provide a payment service for a shop, a landmark or a parking ground.

The location specific content may additionally be time specific. In other words, location specific content may change over time or may only be available for a predetermined period. Preferably, in the first step, location specific content is transmitted, the location specific content being related to a predetermined spatial position and a predetermined period. The content may only be sent during the predetermined period.

According to a preferred embodiment of the present invention, a viewing surface, in particular a facade of a building, is located at the predetermined spatial position and, in the fourth step, the location specific content is displayed as an overlay to the viewing surface.

According to the present invention, it is thereby advantageously possible to provide location specific content to a user wearing the head mounted display device, wherein the content is visible at a viewing surface that is situated at the predetermined position in the real world. Advantageously, the location specific content is displayed as a transparent or semi-transparent overlay to the viewing surface, so that characteristics of the real world viewing surface are at least partly visible to the user of the head mounted display. Alternatively, the overlay may be opaque. Preferably, it is determined if the viewing surface is visible from the position of the head mounted display device. In other words a missing line of sight between the head mounted display device and the viewing surface may be detected. Display of the location specific content may be adapted accordingly. E.g. the location specific content may be displayed using dotted lines.

According to a preferred embodiment of the present invention, the method further comprises:
-- in a first intermediate step, subsequent to the first step and prior to the second step, receiving the location specific content by a mobile user device, in particular a cellphone,
-- in a second intermediate step, subsequent to the first intermediate step and prior to the second step, transmitting the location specific content from the mobile user device to the head mounted display device, the head mounted display device being separate from the mobile user device.

According to the present invention, it is thereby advantageously possible to reduce complexity of the head mounted display device. Hardware resources for receiving the transmitted location specific content may be arranged in the mobile user device. Those hardware resources may be configured as long distance wireless communication resources, e.g. as a cellphone or a satellite phone. The head mounted display device may include hardware resources for short distance wireless communication, e.g. a Bluetooth receiver, a ZigBee receiver or a Wi-Fi receiver.

According to a preferred embodiment of the present invention, in the third step, the distance between the head mounted display device and the predetermined spatial position is determined using a measurement device of the head mounted display device, in particular an optical measurement device; and/or in the third step, the distance between the head mounted display device and the predetermined spatial position is determined using distance information received by a mobile user device, in particular a cellphone, from a base station of a mobile communication network.

According to the present invention, it is thereby advantageously possible to reliably determine the distance between the head mounted display and the predetermined spatial position, in particular a viewing surface located at the predetermined spatial position. The measurement device may be an optical measurement device, e.g. a laser rangefinder. The determined distance may be transmitted from the head mounted display device to the mobile user device for further processing. Alternatively or additionally, the distance is determined using a separate mobile user device, e.g. a cellphone. As the mobile user device is typically in close proximity to the head mounted display device, it is typically carried by the user of the head mounted display device, the distance between the head mounted display device and the predetermined spatial position can be approximated by the distance between the mobile user device and the predetermined spatial position. The mobile communication network may determine the position of the mobile user device. The position of the mobile user device may be continuously tracked by the mobile communication network. The position of the mobile user device may be transmitted from base stations of the mobile communication network to the mobile user device continuously. Alternatively, the position of the mobile user device can be determined using a satellite navigation system, e.g. GPS. According to another alternative, the position of the mobile user device may be determined by a sensor of the mobile user device, e.g. a video camera or an infrared sensor. Based on the position of the mobile user device, which approximately equals the position of the head mounted display device, the distance between the head mounted display device and the predetermined spatial position can be calculated and transmitted to the mobile user device.

According to a preferred embodiment of the present invention, in the first step, location specific content is transmitted via a cell broadcast from a base station of a mobile communication network to a plurality of mobile user devices, in particular cellphones. Thus, location specific content is transmitted as a broadcast message. The broadcast message may reach a huge number of users at once, thereby reducing the required transmission bandwidth.

According to the present invention, it is thereby advantageously possible to transmit the local specific content to a plurality of mobile user devices of a mobile communication network, in particular a GSM or UMTS network. A further benefit of distributing the content via a cell broadcast is that transmission of the content is not affected by high network load. Thus, location specific content can be provided to the user even during high network load situations. The information to be broadcasted may be common information, e.g. opening hours of a shopping mall.

According to a preferred embodiment of the present invention, in the third step, the spatial position of the head mounted display is determined; and wherein, in the fourth step, the location specific content is displayed using the head mounted display device additionally depending on the determined spatial position of the head mounted display device.

According to the present invention, it is thereby advantageously possible to selectively display the location specific content depending on the spatial position of the head mounted display device. Preferably, the location specific content is only displayed if the determined distance is below a given maximum distance value and the predetermined spatial position, e.g. where the shop is located at, is visible from the spatial position of the head mounted display device.

According to a preferred embodiment of the present invention, in the third step, the eye movement and/or a viewing angle of a user of the head mounted display device is determined; and wherein, in the fourth step, the location specific content is displayed using the head mounted display device additionally depending on the determined eye movement and/or a determined viewing angle.

According to the present invention, it is thereby advantageously possible to improve perspective view of the content. Using determined eye movement and/or a determined viewing angle the location specific content may be displayed using the head mounted display device with a correct perspective. The eye movement can be determined by an eye tracking device of the head mounted display device. The viewing angle can be determined by an inertial navigation system (INS) attached to the head mounted display device.

According to a preferred embodiment of the present invention, in a third intermediate step, subsequent to the third step and prior to the fourth step, location specific content to be displayed is rendered using a mobile user device, in particular a cellphone, the mobile user device being separate from the head mounted display device.

According to the present invention, it is thereby advantageously possible to reduce computing resources of the head mounted display device. Processing of the location specific content to be displayed, e.g. scaling and rendering of the content, is done using a processor of the mobile user device. Then, rendered location specific content is transmitted to the head mounted display device.

According to an alternative preferred embodiment of the present invention, in a third intermediate step, subsequent to the third step and prior to the fourth step, location specific content to be displayed is rendered using a processor of a mobile communication network.

According to the present invention, it is thereby advantageously possible to transfer computationally intensive tasks to a powerful processing resource external to the head mounted display or a mobile user device connected with the head mounted display. Consequently, latency may be reduced in order to provide seamless experience to the user of the head mounted display device.

According to a preferred embodiment of the present invention, the mobile user device is identified by the mobile communication network, in particular a server of the mobile communication network. Alternatively or additionally to broadcasted location specific content, personal location specific content is transmitted from the mobile communication network, in particular from the server of the mobile communication network, to the mobile user device. The mobile communication network may keep a continuous connection to the mobile user device. In case the mobile user device is detected to be in the proximity of the predetermined spatial position, personal location specific content may be transmitted to the mobile user device via the mobile communications network. The personal location specific content may then be scaled and/or rendered by the mobile user device and forwarded to the head mounted display device for displaying it as an overlay to the real world view.

According to the present invention, it is thereby advantageously possible to provide personalized content to the user of the head mounted display device. The personal content may be transmitted to the head mounted display via a dedicated network resource, e,g, a dedicated channel. The dedicated network resource my comprise personalization intelligence in the backend, e.g. a virtual private assistant.

According to a preferred embodiment of the present invention, in the fourth step, the location specific content is displayed in a transparent or semi-transparent display of the head mounted display device; or the location specific content is displayed in a non-transparent display of a head mounted display device.

According to a preferred embodiment of the present invention, display of the location specific content is controlled by a wearable device, in particular a ring, a wristband or a watch.

According to the present invention, it is thereby advantageously possible to interpret gestures of the user of the head mounted display device in order to control the display of location specific content. By way of the wearable device it is possible to navigate through the content displayed in the head mounted display device, e.g. by scrolling the content and/or selecting pieces of content.

The present invention also relates to a system for displaying location specific content by a head mounted display device, comprising:
-- a transmitter for transmitting location specific content, the location specific content being related to a predetermined spatial position,
-- a head mounted display device for receiving the location specific content,
-- a distance measurement device for determining a distance between the head mounted display device and the predetermined spatial position, and
-- a display head mounted display device for displaying the location specific content depending on the determined distance between the head mounted display device and the predetermined spatial position.

With the system according to the invention the same advantages can be achieved as described above in relation to the method according to the invention.

Furthermore, the present invention relates to a program comprising a computer readable program code which, when executed on a head mounted display device or on a mobile user device or on a base station, or in part on the head mounted display device and in part on the mobile user device and in part on the base station, causes the head mounted display device and/or the mobile user device and/or the base station to perform a method according to the present invention.

Furthermore, the present invention relates to a computer program product for using a head mounted display device with a base station, the computer program product comprising a computer program stored on a storage medium, the computer program comprising program code which, when executed on a head mounted display device or on a mobile user device or on a base station, or in part on the head mounted display device and in part on the mobile user device and in part on the base station, causes the head mounted display device and/or the mobile user device and/or the base station to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

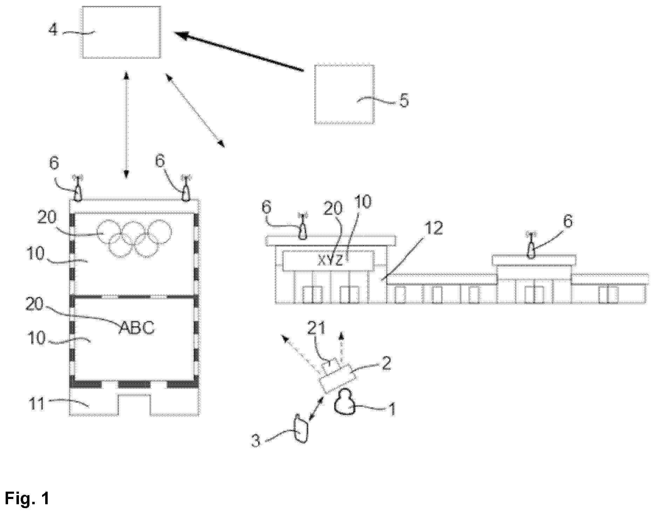

**Figure 1** schematically illustrates a system according to the present invention.

### DETAILED DESCRIPTION

The present invention will be described with respect to an particular embodiment and with reference to a drawing but the invention is not limited thereto but only by the claims. The drawing described is only schematic and is non-limiting. In the drawing, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In **Figure 1**, a system for displaying location specific content related to a predetermined spatial location by a head mounted display device according to an embodiment of the present invention is illustrated. The system according to the exemplary embodiment uses a mobile communication network for transmitting location specific content to the head mounted display device 2. However, the skilled person may contemplate alternative communication technologies, e.g. a satellite communication network.

The system comprises a plurality of transmitters 6 in the form of base stations of the mobile communication network. Those transmitters 6 are configured to transmit location specific content provided by a server 4, 5 of the mobile communication network to a mobile user device 3, e.g. a cellphone. The mobile user device 3 is carried by a user 1 and is connected to a head mounted display device 2 worn by the same user 1 by a wireless connection, e.g. by a Bluetooth connection, a Wi-Fi- connection or a ZigBee connection.

The head mounted display device 2 comprises a display which is either of the transparent or semi-transparent type (optical see-through) or of the non-transparent type (video see-through). The head mounted display device further comprises a distance measurement device 21 which is configured to determine a distance between the head mounted display device 2 and a predetermined spatial position, e.g. a fascade of a building 11, 12. The distance measurement device 21 is configured as an optical distance measurement device, e.g. a laser rangefinder. Alternatively or additionally, the distance is determined using the mobile user device 3, e.g. a cellphone. The mobile communication network determines the distance between the mobile user device 3 and the predetermined spatial position and transmits the distance to the mobile user device, in particular via a dedicated communication channel. As will be described in detail in the following the head mounted display device 2 is displaying the location specific content depending on the determined distance between the head mounted display device 2 and the predetermined spatial position.

The location specific content is related to a predetermined spatial position. In the exemplary embodiment a first predetermined spatial position is a position of a viewing surface 10 configured as a fascade of a mixed business building 11 that includes several shops and/or offices. A second predetermined spatial position is a position of a viewing surface 10 configured as a fascade of a mall 12 comprising a plurality of shops. The method and system according to the invention allow providing an realistic overlay of the location specific content 20 to the fascade of the building 11 and/or the mall 12. Using the inventive method and system, the location specific content 20 can be displayed in correct perspective.

In a first step, location specific content is transmitted by a server 4, 5 of the mobile communication network via a base station 6 to the mobile user device 3. In a first intermediate step, subsequent to the first step and prior to the second step, the location specific content is received by the mobile user device 3. In a second intermediate step, subsequent to the first intermediate step and prior to the second step, the location specific content is transmitted from the mobile user device 3 to the head mounted display device 2. Communication between the mobile user device 3 and the head mounted display device 2 may be enabled by a short-distance wireless connection, e.g. a Bluetooth connection, a Wi-Fi- connection or a ZigBee connection.

In a second step, subsequent to the first step, the location specific content is received by the head mounted display device 2.

In a third step, the distance between the head mounted display device 2 and the predetermined spatial position is determined using the measurement device 21 of the head mounted display device 2 and/or the distance between the head mounted display device 2 and the predetermined spatial position is determined using distance information received by the mobile user device 3 from a base station 6 of the mobile communication network. Further, in the third step, the eye movement and a viewing angle of a user of the head mounted display device 2 is determined. The eye movement is determined by an eye tracking device of the head mounted display device 2. The viewing angle can be determined by an inertial navigation system (INS) of the head mounted display device 2.

The determined distance, the determined eye movement and the determined viewing angle are provided to the mobile user device 3 for processing of the location specific content received. A processor of the mobile user device 3 renders the location specific content in order to provide a display of the content 20 in correct perspective. Using the processor of the mobile user device 3 the content can be processed in real time The rendered content is transmitted from the mobile user device 3 to the head mounted display device 2 and, in the fourth step, the location specific content 20 is displayed using the head mounted display device 2 depending on the determined distance, the determined eye movement and the determined viewing angle. In the exemplary embodiment depicted in Fig. 1 the displayed location specific content 20 is in the form of an advertisement that is embedded in the real world view on viewing surface 10 of a building 11, 12.

The location specific content may be transmitted via a cell broadcast from a base station 6 of a mobile communication network to a plurality of mobile user devices 3 in form of a broadcast message. The broadcast message may reach a huge number of mobile user devices 3 at once, thereby reducing the required transmission bandwidth in the mobile communication network.

Alternatively, the location specific content may be transmitted via individual messages directed to a single mobile user device 3. First of all, the mobile user device 3 is identified by the mobile communication network, in particular a server 4, 5 of the mobile communication network. Thus, a user of both the mobile user device 3 and the head mounted display device 2 may be identified. In the event that the head mounted display device 2 is in the vicinity of the predetermined spatial location transmission of location specific content, e.g. a stream of virtual reality data, may be triggered to be sent from a server 4, 5 of the mobile communication network via a base station 6 to the mobile user device 3.

The mobile communication network comprises at least one network provider server 4 hosted by the provider of the mobile communication network and at least one third party server 5 hosted by a third party. According to an alternate embodiment of the invention, the network provider server 4 continuously tracks the spatial position of the mobile user device 3. If the network provider server 4 detects that the mobile user device 3 is located in the vicinity of a first predetermined spatial position, the network provider server 4 authenticates on behalf of the user to the third party server 5 which hosts content related to the first predetermined spatial position. Thereby, the third party server 5 is triggered to transmit location specific content related to the first predetermined position via the mobile communication network to the mobile user device 3 and, to the head mounted display 2, respectively.

The displayed content 20 may be passive content which is to be displayed for the purpose of providing information to the user of the head mounted display device 2. Alternatively, interactive content 20 may be displayed using the head mounted display device. The interactive content 20 may be in the form of a user interface for processing payment transactions, in particular cashless payments. The head mounted display device 2 may display an interface that allows authorizing such a payment. A two factor authentication can be used, wherein a keypad is displayed using the head outned display device 2. The user enters a predetermined PIN via a gesture tracking device of the head mounted display device. In case the PIN is entered correctly, a scan of the iris of the user of the head mounted display device is triggered. Thereby, the user may authorize payments and/or transaction in interaction with the head mounted display device 2 and/or the mobile user device 3.

## Claims

1. Method for displaying location specific content (20) by a head mounted display device (2), comprising:
-- in a first step, transmitting location specific content, the location specific content being related to a predetermined spatial position,
-- in a second step, subsequent to the first step, receiving the location specific content by a head mounted display device (2),
-- in a third step, determining a distance between the head mounted display device (2) and the predetermined spatial position, wherein, the distance between the head mounted display device (2) and the predetermined spatial position is determined using distance information received by a mobile user device (3) from a base station (6) of a mobile communication network,
-- in a fourth step, subsequent to the third step, displaying the location specific content (20) using the head mounted display device (2) depending on the determined distance between the head mounted display device (2) and the predetermined spatial position.

2. Method according to claim 1, wherein a viewing surface (10), in particular a facade of a building, is located at the predetermined spatial position and, in the fourth step, the location specific content (20) is displayed as an overlay to the viewing surface.

3. Method according to any of the preceding claims, further comprising:
-- in a first intermediate step, subsequent to the first step and prior to the second step, receiving the location specific content (20) by a mobile user device (3), in particular a cellphone,
-- in a second intermediate step, subsequent to the first intermediate step and prior to the second step, transmitting the location specific content from the mobile user device (3) to the head mounted display device (2), the head mounted display device (2) being separate from the mobile user device (3).

4. Method according to any of the preceding claims, wherein, in the third step, the distance between the head mounted display device (2) and the predetermined spatial position is determined using a measurement device of the head mounted display device (2), in particular an optical measurement device; and/or
wherein, the mobile user device (3) is a cellphone.

5. Method according to any of the preceding claims, wherein, in the first step, location specific content is transmitted via a cell broadcast from a base station (6) of a mobile communication network to a plurality of mobile user devices (3), in particular a cellphones.

6. Method according to any of the preceding claims, wherein, in the third step, the spatial position of the head mounted display (2) is determined; and wherein, in the fourth step, the location specific content (20) is displayed using the head mounted display device (2) additionally depending on the determined spatial position of the head mounted display device (2).

7. Method according to any of the preceding claims, wherein, in the third step, the eye movement and/or a viewing angle of a user of the head mounted display device (2) is determined; and wherein, in the fourth step, the location specific content is displayed using the head mounted display device (2) additionally depending on the determined eye movement and/or a determined viewing angle.

8. Method according to any of the preceding claims, wherein, in a third intermediate step, subsequent to the third step and prior to the fourth step, location specific content to be displayed is rendered using a mobile user device (3), in particular a cellphone, the mobile user device being separate from the head mounted display device (2).

9. Method according to any of the preceding claims, wherein the mobile user device is identified by the mobile communication network, in particular a server of the mobile communication network.

10. Method according to any of the preceding claims, wherein, in the fourth step, the location specific content (20) is displayed in a transparent or semi-transparent display of the head mounted display device (2); or the location specific content (20) is displayed in a non-transparent display of a head mounted display device (2).

11. Method according to any of the preceding claims, wherein, display of the location specific content is controlled by a wearable device, in particular a ring, a wristband or a watch.

12. System for displaying location specific content by a head mounted display device, comprising:
-- a transmitter for transmitting location specific content, the location specific content being related to a predetermined spatial position,
-- a head mounted display device (2) for receiving the location specific content,
-- a distance measurement device for determining a distance between the head mounted display device (2) and the predetermined spatial position, wherein, the distance between the head mounted display device (2) and the predetermined spatial position is configured to be determined using distance information received by a mobile user device (3) from a base station (6) of a mobile communication network, and
-- a display head mounted display device (2) for displaying the location specific content depending on the determined distance between the head mounted display device (2) and the predetermined spatial position.

13. Program comprising a computer readable program code which, when executed in part on a head mounted display device and in part on a mobile user device and in part on a base station, causes the head mounted display device and the mobile user device and the base station to perform a method according to any of claims 1 to 11.

14. Computer program product for using a head mounted display device with a base station, the computer program product comprising a computer program stored on a storage medium, the computer program comprising program code which, when executed in part on a head mounted display device and in part on a mobile user device and in part on a base station, causes the head mounted display device and/ the mobile user device and the base station to perform a method according to any of claims 1 to 11.

## Patentansprüche

1. Verfahren zum Anzeigen von standortspezifischem Inhalt (20) durch eine am Kopf montierte Anzeigevorrichtung (2), umfassend:
- in einem ersten Schritt, Senden von standortspezifischem Inhalt, wobei der standortspezifische Inhalt eine vorbestimmte räumliche Position betrifft,
- in einem zweiten Schritt, nachfolgend auf den ersten Schritt, Empfangen des standortspezifischen Inhalts durch eine am Kopf montierte Anzeigevorrichtung (2),
- in einem dritten Schritt, Bestimmen eines Abstands zwischen der am Kopf montierten Anzeigevorrichtung (2) und der vorbestimmten räumlichen Position, wobei der Abstand zwischen der am Kopf montierten Anzeigevorrichtung (2) und der vorbestimmten räumlichen Position unter Verwendung von Abstandsinformationen bestimmt wird, die durch eine mobile Benutzervorrichtung (3) von einer Basisstation (6) eines mobilen Kommunikationsnetzwerks empfangen werden,
- in einem vierten Schritt, nachfolgend auf den dritten Schritt, Anzeigen des standortspezifischen Inhalts (20) unter Verwendung der am Kopf montierten Anzeigevorrichtung (2) in Abhängigkeit von dem vorbestimmten Abstand zwischen der am Kopf montierten Anzeigevorrichtung (2) und der vorbestimmten räumlichen Position.

2. Verfahren nach Anspruch 1, wobei sich eine Betrachtungsfläche (10), insbesondere eine Fassade eines Gebäudes, an der vorbestimmten räumlichen Position befindet und, in dem vierten Schritt, der standortspezifische Inhalt (20) als eine Überlagerung der Betrachtungsfläche angezeigt wird.

3. Verfahren nach einem der vorhergehenden Ansprüche, ferner umfassend:
- in einem ersten Zwischenschritt, nachfolgend auf den ersten Schritt und vor dem zweiten Schritt, Empfangen des standortspezifischen Inhalts (20) durch eine mobile Benutzervorrichtung (3), insbesondere ein Mobiltelefon,
- in einem zweiten Zwischenschritt, nachfolgend auf den ersten Zwischenschritt und vor dem zweiten Schritt, Senden des standortspezifischen Inhalts von der mobilen Benutzervorrichtung (3) an die am Kopf montierte Anzeigevorrichtung (2), wobei die am Kopf montierte Anzeigevorrichtung (2) von der mobilen Benutzervorrichtung (3) getrennt ist.

4. Verfahren nach einem der vorhergehenden Ansprüche, wobei, in dem dritten Schritt, der Abstand zwischen der am Kopf montierten Anzeigevorrichtung (2) und der vorbestimmten räumlichen Position unter Verwendung einer Messvorrichtung der am Kopf montierten Anzeigevorrichtung (2), insbesondere einer optischen Messvorrichtung, bestimmt wird; und/oder wobei die mobile Benutzervorrichtung (3) ein Mobiltelefon ist.

5. Verfahren nach einem der vorhergehenden Ansprüche, wobei, in dem ersten Schritt, standortspezifischer Inhalt über ein Cell Broadcast von einer Basisstation (6) eines mobilen Kommunikationsnetzwerks an mehrere mobile Benutzervorrichtungen (3), insbesondere ein Mobiltelefon, gesendet wird.

6. Verfahren nach einem der vorhergehenden Ansprüche, wobei, in dem dritten Schritt, die räumliche Position der am Kopf montierten Anzeige (2) bestimmt wird; und wobei, in dem vierten Schritt, der standortspezifische Inhalt (20) unter Verwendung der am Kopf montierten Anzeigevorrichtung (2) zusätzlich in Abhängigkeit von der bestimmten räumlichen Position der am Kopf montierten Anzeigevorrichtung (2) angezeigt wird.

7. Verfahren nach einem der vorhergehenden Ansprüche, wobei, in dem dritten Schritt, die Augenbewegung und/oder ein Betrachtungswinkel eines Benutzers der am Kopf montierten Anzeigevorrichtung (2) bestimmt wird; und wobei, in dem vierten Schritt, der standortspezifische Inhalt unter Verwendung der am Kopf montierten Anzeigevorrichtung (2) zusätzlich in Abhängigkeit von der bestimmten Augenbewegung und/oder eines bestimmten Betrachtungswinkels angezeigt wird.

8. Verfahren nach einem der vorhergehenden Ansprüche, wobei, in einem dritten Zwischenschritt, nachfolgend auf den dritten Schritt und vor dem vierten Schritt, standortspezifischer Inhalt, der anzuzeigen ist, unter Verwendung einer mobilen Benutzervorrichtung (3), insbesondere eines Mobiltelefons, gerendert wird, wobei die mobile Benutzervorrichtung von der am Kopf montierten Anzeigevorrichtung (2) getrennt ist.

9. Verfahren nach einem der vorhergehenden Ansprüche, wobei die mobile Benutzervorrichtung durch das mobile Kommunikationsnetzwerk, insbesondere einen Server des mobilen Kommunikationsnetzwerks, identifiziert wird.

10. Verfahren nach einem der vorhergehenden Ansprüche, wobei, in dem vierten Schritt, der standortspezifische Inhalt (20) in einer transparenten oder halbtransparenten Anzeige der am Kopf montierten Anzeigevorrichtung (2) angezeigt wird; oder der standortspezifische Inhalt (20) in einer nicht transparenten Anzeige einer am Kopf montierten Anzeigevorrichtung (2) angezeigt wird.

11. Verfahren nach einem der vorhergehenden Ansprüche, wobei eine Anzeige des standortspezifischen Inhalts durch eine tragbare Vorrichtung, insbesondere einen Ring, ein Armband oder eine Uhr, gesteuert wird.

12. System zum Anzeigen von standortspezifischem Inhalt durch eine am Kopf montierte Anzeigevorrichtung, umfassend:
- einen Sender zum Senden von standortspezifischem Inhalt, wobei der standortspezifische Inhalt eine vorbestimmte räumliche Position betrifft,
- eine am Kopf montierte Anzeigevorrichtung (2) zum Empfangen des standortspezifischen Inhalts,
- eine Abstandsmessvorrichtung zum Bestimmen eines Abstands zwischen der am Kopf montierten Anzeigevorrichtung (2) und der vorbestimmten räumlichen Position, wobei der Abstand zwischen der am Kopf montierten Anzeigevorrichtung (2) und der vorbestimmten räumlichen Position eingerichtet ist, um unter Verwendung von Abstandsinformationen bestimmt zu werden, die durch eine mobile Benutzervorrichtung (3) von einer Basisstation (6) eines mobilen Kommunikationsnetzwerks empfangen werden, und
- eine am Kopf montierte Anzeigevorrichtung (2) zum Anzeigen des standortspezifischen Inhalts in Abhängigkeit von dem bestimmten Abstand zwischen der am Kopf montierten Anzeigevorrichtung (2) und der vorbestimmten räumlichen Position.

13. Programm, umfassend einen computerlesbaren Programmcode, der, wenn er teilweise auf einer am Kopf montierten Anzeigevorrichtung und teilweise auf einer mobilen Benutzervorrichtung sowie teilweise auf einer Basisstation ausgeführt wird, die am Kopf montierte Anzeigevorrichtung und die mobile Benutzervorrichtung sowie die Basisstation dazu veranlasst, ein Verfahren nach einem der Ansprüche 1 bis 11 durchzuführen.

14. Computerprogrammprodukt zum Verwenden einer am Kopf montierten Anzeigevorrichtung mit einer Basisstation, wobei das Computerprogrammprodukt ein Computerprogramm umfasst, das auf einem Speichermedium gespeichert ist, wobei das Computerprogramm einen Programmcode umfasst, der, wenn er teilweise auf einer am Kopf montierten Anzeigevorrichtung und teilweise auf einer mobilen Benutzervorrichtung sowie teilweise auf einer Basisstation ausgeführt wird, die am Kopf montierte Anzeigevorrichtung und die mobile Benutzervorrichtung sowie die Basisstation dazu veranlasst, ein Verfahren nach einem der Ansprüche 1 bis 11 durchzuführen.

## Revendications

1. Procédé d'affichage d'un contenu propre à l'emplacement (20) par un dispositif de visiocasque (2), comprenant :
- dans une première étape, la transmission d'un contenu propre à l'emplacement, le contenu propre à l'emplacement étant relatif à une position spatiale prédéterminée,
- dans une deuxième étape, ultérieure à la première étape, la réception du contenu propre à l'emplacement par un dispositif de visiocasque (2),
- dans une troisième étape, la détermination d'une distance entre le dispositif de visiocasque (2) et la position spatiale prédéterminée, dans lequel, la distance entre le dispositif de visiocasque (2) et la position spatiale prédéterminée est déterminée à l'aide d'informations de distance reçues par un dispositif utilisateur mobile (3) depuis une station de base (6) d'un réseau de communication mobile,
- dans une quatrième étape, ultérieure à la troisième étape, l'affichage du contenu propre à l'emplacement (20) à l'aide du dispositif de visiocasque (2) en fonction de la distance déterminée entre le dispositif de visiocasque (2) et la position spatiale prédéterminée.

2. Procédé selon la revendication 1, dans lequel une surface de vision (10), en particulier une façade d'un bâtiment, est située à la position spatiale prédéterminée et, dans la quatrième étape, le contenu propre à l'emplacement (20) est affiché comme une incrustation sur la surface de vision.

3. Procédé selon l'une quelconque des revendications précédentes, comprenant en outre :
- dans une première étape intermédiaire, ultérieure à la première étape et antérieure à la deuxième étape, la réception du contenu propre à l'emplacement (20) par un dispositif utilisateur mobile (3), en particulier un téléphone cellulaire,
- dans une deuxième étape intermédiaire, ultérieure à la première étape intermédiaire et antérieure à la deuxième étape, la transmission du contenu propre à l'emplacement depuis le dispositif utilisateur mobile (3) au dispositif de visiocasque (2), le dispositif de visiocasque (2) étant séparé du dispositif utilisateur mobile (3).

4. Procédé selon l'une quelconque des revendications précédentes, dans lequel, dans la troisième étape, la distance entre le dispositif de visiocasque (2) et la position spatiale prédéterminée est déterminée à l'aide d'un dispositif de mesure du dispositif de visiocasque (2), en particulier un dispositif de mesure optique ; et/ou dans lequel, le dispositif utilisateur mobile (3) est un téléphone cellulaire.

5. Procédé selon l'une quelconque des revendications précédentes, dans lequel, dans la première étape, un contenu propre à l'emplacement est transmis via une diffusion cellulaire depuis une station de base (6) d'un réseau de communication mobile vers une pluralité de dispositifs utilisateurs mobiles (3), en particulier un téléphone cellulaire.

6. Procédé selon l'une quelconque des revendications précédentes, dans lequel, dans la troisième étape, la position spatiale du dispositif de visiocasque (2) est déterminée ; et dans lequel, dans la quatrième étape, le contenu propre à l'emplacement (20) est affiché à l'aide du dispositif de visiocasque (2) dépendant de surcroît de la position spatiale déterminée du dispositif de visiocasque (2).

7. Procédé selon l'une quelconque des revendications précédentes, dans lequel, dans la troisième étape, le mouvement de l'oeil et/ou un angle de vision d'un utilisateur du dispositif de visiocasque (2) est déterminé ; et dans lequel, dans la quatrième étape, le contenu propre à l'emplacement est affiché à l'aide du dispositif de visiocasque (2) dépendant de surcroît du mouvement de l'oeil déterminé et/ou d'un angle de vision déterminé.

8. Procédé selon l'une quelconque des revendications précédentes, dans lequel, dans une troisième étape intermédiaire, ultérieure à la troisième étape et antérieure à la quatrième étape, un contenu propre à l'emplacement à afficher est rendu à l'aide d'un dispositif utilisateur mobile (3), en particulier un téléphone cellulaire, le dispositif utilisateur mobile étant séparé du dispositif de visiocasque (2).

9. Procédé selon l'une quelconque des revendications précédentes, dans lequel le dispositif utilisateur mobile est identifié par le réseau de communication mobile, en particulier un serveur du réseau de communication mobile.

10. Procédé selon l'une quelconque des revendications précédentes, dans lequel, dans la quatrième étape, le contenu propre à l'emplacement (20) est affiché dans un affichage transparent ou semi-transparent du dispositif de visiocasque (2) ; ou le contenu propre à l'emplacement (20) est affiché dans un affichage non transparent d'un dispositif de visiocasque (2).

11. Procédé selon l'une quelconque des revendications précédentes, dans lequel, l'affichage du contenu propre à l'emplacement est commandé par un dispositif portable, en particulier une bague, un bracelet ou une montre.

12. Système d'affichage d'un contenu propre à l'emplacement par un dispositif de visiocasque, comprenant :
- un émetteur destiné à transmettre un contenu propre à l'emplacement, le contenu propre à l'emplacement étant relatif à une position spatiale prédéterminée,
- un dispositif de visiocasque (2) destiné à recevoir le contenu propre à l'emplacement,
- un dispositif de mesure de distance destiné à déterminer une distance entre le dispositif de visiocasque (2) et la position spatiale prédéterminée, dans lequel, la distance entre le dispositif de visiocasque (2) et la position spatiale prédéterminée est configurée pour être déterminée à l'aide d'informations de distance reçues par un dispositif utilisateur mobile (3) depuis une station de base (6) d'un réseau de communication mobile, et
- un dispositif de visiocasque (2) destiné à afficher le contenu propre à l'emplacement dépendant de la distance déterminée entre le dispositif de visiocasque (2) et la position spatiale prédéterminée.

13. Programme comprenant un code de programme lisible par ordinateur qui, lorsqu'il est exécuté en partie sur un dispositif de visiocasque et en partie sur un dispositif utilisateur mobile et en partie sur une station de base, amène le dispositif de visiocasque et le dispositif utilisateur mobile et la station de base à réaliser un procédé selon l'une quelconque des revendications 1 à 11.

14. Produit programme d'ordinateur d'utilisation d'un dispositif de visiocasque avec une station de base, le produit programme d'ordinateur comprenant un programme d'ordinateur stocké sur un support de stockage, le programme d'ordinateur comprenant un code de programme qui, lorsqu'il est exécuté en partie sur un dispositif de visiocasque et en partie sur un dispositif utilisateur mobile et en partie sur une station de base, amène le dispositif de visiocasque et/ le dispositif utilisateur mobile et la station de base à réaliser un procédé selon l'une quelconque des revendications 1 à 11.
